# EUROPEAN PATENT APPLICATION

(11) **EP 4 468 529 A1**
(43) Date of publication of application: **27.11.2024**
(21) Application number: 22919292.7
(22) Date of filing: 09.12.2022
(51) Int. Cl.: H01R 13/52

(54) **CONNECTOR ASSEMBLY**

(30) Priority: 17.01.2022 JP 2022004967
(71) Applicant: SUMITOMO WIRING SYSTEMS, LTD., Yokkaichi-shi, Mie 510-8503 (JP); NISSAN MOTOR CO., LTD., Kanagawa 221-0023 (JP)
(72) Inventor: MATSUMOTO, Takeshi, Yokkaichi-shi, Mie 510-8503 (JP); MORISHITA, Shinichiro, Yokkaichi-shi, Mie 510-8503 (JP); YONEDA, Takahiro, Yokohama-shi, Kanagawa 221-0023 (JP); HIROSE, Aritsugu, Yokohama-shi, Kanagawa 221-0023 (JP)
(74) Representative: Müller-Boré & Partner Patentanwälte PartG mbB
(86) International application number: PCT/JP2022/045555
(87) International publication number: WO 2023/136007

(57) **Abstract**

Included are a connector housing holding a terminal connected to an end portion of an electric wire, a tubular shield shell surrounding the connector housing, a tubular braided wire surrounding the electric wire extending in a first direction from the connector housing, a tubular rubber boot surrounding the braided wire, a first tightening member tightening the rubber boot, and a second tightening member tightening the braided wire. The shield shell has a tubular boot attachment portion and a tubular wire attachment portion. The rubber boot has a tubular boot body and an annular sealing portion. The tubular boot attachment portion has, on an outer peripheral side thereof, a tubular sealing surface with which the sealing portion comes into contact, and a first protrusion portion protruding outward in a radial direction from a portion on the first direction side of the sealing surface.

## Description

### TECHNICAL FIELD

The present disclosure relates to a connector assembly.

This application claims priority on Japanese Patent Application No. 2022-004967 filed on January 17, 2022, the entire contents of which are incorporated herein by reference.

### BACKGROUND ART

For example, in a vehicle such as an electric or hybrid vehicle, a wire harness is used to connect multiple in-vehicle devices. The wire harness is electrically connected to the in-vehicle devices via connectors. PATENT LITERATURE 1 discloses a connector.

### CITATION LIST

### [PATENT LITERATURE]

PATENT LITERATURE 1: Japanese Laid-Open Patent Publication No. 2021-12847

### SUMMARY OF THE INVENTION

A connector assembly according to an aspect of the present disclosure includes: a connector housing holding a terminal connected to an end portion of an electric wire; a tubular shield shell surrounding the connector housing; a tubular braided wire attached to the shield shell and surrounding the electric wire extending in a first direction from the connector housing; a tubular rubber boot attached to the shield shell and surrounding the braided wire; a first tightening member tightening the rubber boot to the shield shell; and a second tightening member tightening the braided wire to the shield shell, wherein the shield shell has a tubular boot attachment portion for attaching the rubber boot, and a tubular wire attachment portion for attaching the braided wire, the wire attachment portion is provided on the first direction side with respect to the boot attachment portion, the rubber boot has a tubular boot body and an annular sealing portion provided so as to protrude inward in a radial direction from the boot body, and the tubular boot attachment portion has, on an outer peripheral side thereof, a tubular sealing surface with which the sealing portion comes into contact, and a first protrusion portion protruding outward in the radial direction from a portion on the first direction side of the sealing surface.

### BRIEF DESCRIPTION OF DRAWINGS

FIG. 1 is a perspective view showing a connector assembly of an embodiment.
FIG. 2 is an exploded perspective view of the connector assembly shown in FIG. 1.
FIG. 3 is a cross-sectional view of the connector assembly shown in FIG. 1.
FIG. 4 is a cross-sectional view showing a part of a shield shell.
FIG. 5 is a perspective view of a first tightening member.
FIG. 6 is a perspective view of a second tightening member.
FIG. 7 shows schematic diagrams of a boot attachment portion and a wire attachment portion.
FIG. 8 shows cross-sectional views each showing a part of the connector assembly.
FIG. 9 is a cross-sectional view of a portion where a braided wire is attached by the second tightening member.
FIG. 10 is a cross-sectional view of a conventional connector assembly.
FIG. 11 illustrates a conventional caulking ring.

### DETAILED DESCRIPTION

### <Problems to be solved by the present disclosure>

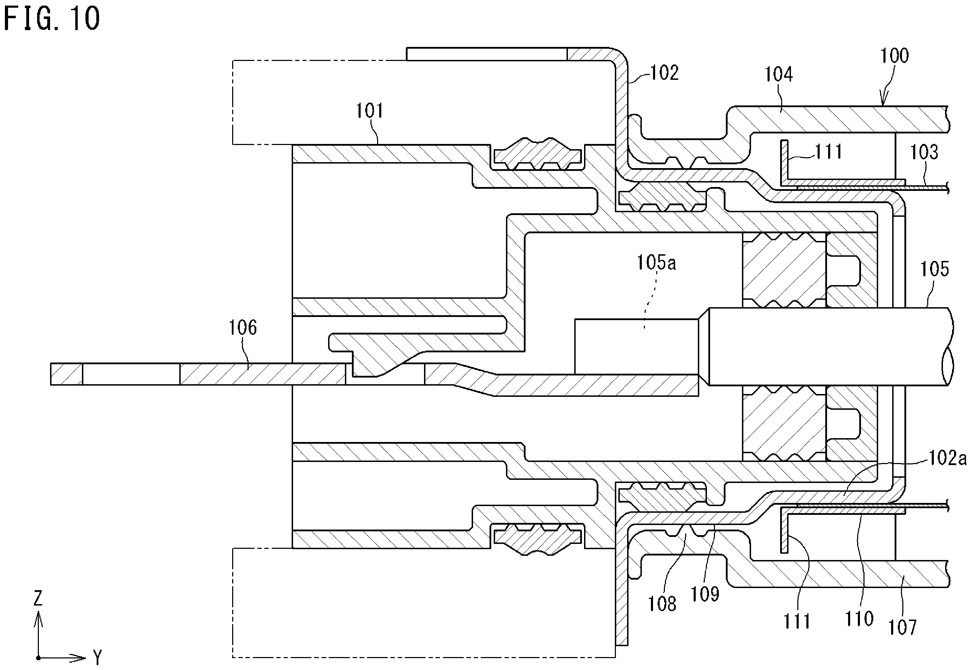

A connector includes a braided wire surrounding an electric wire extending from a body of the connector and a tubular rubber boot surrounding the braided wire, and can also be referred to as connector assembly. FIG. 10 is a cross-sectional view of a conventional connector assembly 100. The connector assembly 100 includes a connector housing 101, a tubular shield shell 102 surrounding the connector housing 101, a braided wire 103 attached to the shield shell 102, and a rubber boot 104 attached to the shield shell 102 and surrounding the braided wire 103. The connector housing 101 holds a terminal 106 connected to an end portion 105a of an electric wire 105.

The electric wire 105 is provided so as to extend in a first direction (direction from left to right in FIG. 10) from the connector housing 101. The braided wire 103 has a tubular shape to surround the electric wire 105. The braided wire 103 is fixed to a portion 102a of the shield shell 102 by a caulking ring 110. The rubber boot 104 has a tubular boot body 107 and an annular sealing portion 108. The shield shell 102 has, on an outer peripheral side thereof, a tubular sealing surface 109 with which the sealing portion 108 comes into contact.

The caulking ring 110 is composed of a metal member that deforms plastically. In the connector assembly 100 shown in FIG. 10, the caulking ring 110 is provided with a plate portion 111 for retaining the rubber boot 104. When the rubber boot 104 tries to come out in the first direction, the sealing portion 108 comes into contact with the plate portion 111 of the caulking ring 110.

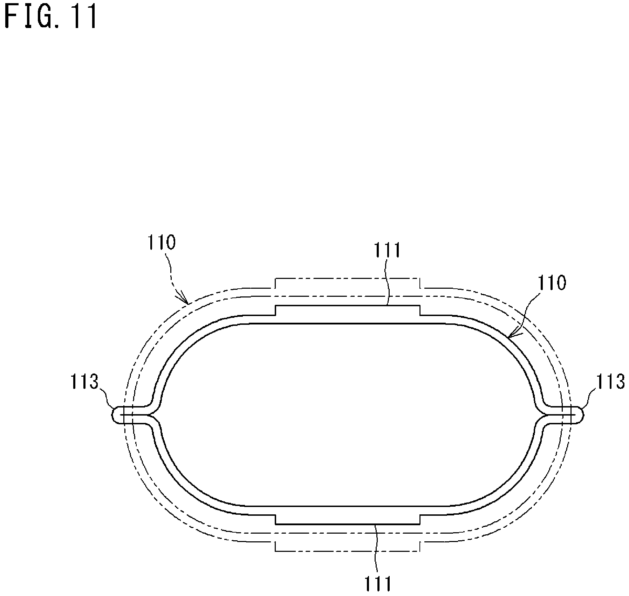

The caulking ring 110 is a member for tightening and fixing the braided wire 103 to the shield shell 102. Therefore, during assembly of the connector assembly 100, the caulking ring 110 is plastically deformed in a direction in which the caulking ring 110 is reduced in diameter. FIG. 11 illustrates the caulking ring 110, showing a state after diameter reduction by a solid line and showing a state before diameter reduction by an alternate long and two short dashes line. When the caulking ring 110 is reduced in diameter, an excess length portion is generated at two locations in the circumferential direction as protrusions 113 accordingly.

The protrusions 113 enlarge outward in the radial direction. The sizes of the protrusions 113 are substantially constant, but may vary. In consideration of this variation, the rubber boot 104 (see FIG. 10) is designed in advance to be larger as a whole, including an allowance, such that the rubber boot 104 does not come into contact with the protrusions 113. Therefore, there is a problem that the connector assembly 101 enlarges in the radial direction.

### <Effects of the present disclosure>

According to the present disclosure, the connector assembly can be downsized in the radial direction.

<Outline of embodiment of the present disclosure>

Hereinafter, the outline of an embodiment of the present disclosure will be listed and described.
(1) A connector assembly of the present embodiment includes: a connector housing holding a terminal connected to an end portion of an electric wire; a tubular shield shell surrounding the connector housing; a tubular braided wire attached to the shield shell and surrounding the electric wire extending in a first direction from the connector housing; a tubular rubber boot attached to the shield shell and surrounding the braided wire; a first tightening member tightening the rubber boot to the shield shell; and a second tightening member tightening the braided wire to the shield shell, wherein the shield shell has a tubular boot attachment portion for attaching the rubber boot, and a tubular wire attachment portion for attaching the braided wire, the wire attachment portion is provided on the first direction side with respect to the boot attachment portion, the rubber boot has a tubular boot body and an annular sealing portion provided so as to protrude inward in a radial direction from the boot body, and the tubular boot attachment portion has, on an outer peripheral side thereof, a tubular sealing surface with which the sealing portion comes into contact, and a first protrusion portion protruding outward in the radial direction from a portion on the first direction side of the sealing surface.
   In the connector assembly of the present embodiment, the first protrusion portion can prevent the rubber boot from falling off in the first direction. The first protrusion portion is provided on the shield shell, and can be designed such that the rubber boot does not interfere with the first protrusion portion. That is, the rubber boot no longer needs to be designed to be large, including an allowance, as in the conventional art, so that the connector assembly can be downsized in the radial direction.
(2) Preferably, the tubular wire attachment portion has, on an outer peripheral side thereof, a tubular electrical connection surface electrically connected to the braided wire, the wire attachment portion has a second protrusion portion protruding outward in the radial direction from a portion on the first direction side of the electrical connection surface, and a distal end of the second protrusion portion is located inward of a distal end of the first protrusion portion in the radial direction. In this case, the second protrusion portion can prevent the braided wire from falling off in the first direction. The wire attachment portion as a whole is smaller in the radial direction than the boot attachment portion. As a result, the boot body can be made smaller in the radial direction, contributing to downsizing the connector assembly.
(3) In the connector assembly of (2) above, further preferably, the distal end of the second protrusion portion is located inward of the sealing surface in the radial direction. In this case, the wire attachment portion becomes even smaller in the radial direction.
(4) Preferably, the second protrusion portion is provided over an entire circumference of the wire attachment portion. In this case, the function of preventing the braided wire from falling off is enhanced.
(5) Preferably, the first protrusion portion is provided over an entire circumference of the boot attachment portion. In this case, the function of preventing the rubber boot from falling off is enhanced.
(6) Preferably, the second tightening member has a band-like portion provided along an outer periphery of the tubular braided wire, and a tightening portion provided at one end of the band-like portion, and the tightening portion has a locking portion allowing another end of the band-like portion to be inserted therethrough and preventing the inserted band-like portion from moving in a direction opposite to an insertion direction.
(7) In the connector assembly of (6) above, preferably, the boot body has a tubular portion having a smooth inner surface, and a housing portion provided at a portion in a circumferential direction of the boot body and having an inner surface located outward of the tubular portion in the radial direction, and the tightening portion is housed at the housing portion. In this case, it is only necessary to provide the housing portion for housing the tightening portion of the second tightening member, at the portion in the circumferential direction of the boot body, and the entire size of the boot body does not need to be unnecessarily increased.
(8) Preferably, the boot attachment portion has, on an inner peripheral side thereof, a first inclined surface reduced in diameter toward the first direction, and the wire attachment portion has, on an inner peripheral side thereof, a second inclined surface enlarged in diameter toward the first direction. In this case, the overall dimensions in the radial direction of the boot attachment portion and the wire attachment portion can be made smaller than in the case where the second inclined surface of the wire attachment portion is reduced in diameter toward the first direction.

### <Details of embodiment of the present disclosure>

Hereinafter, the details of an embodiment of the present disclosure will be described with reference to the drawings. At least parts of the embodiment described below may be combined as desired.

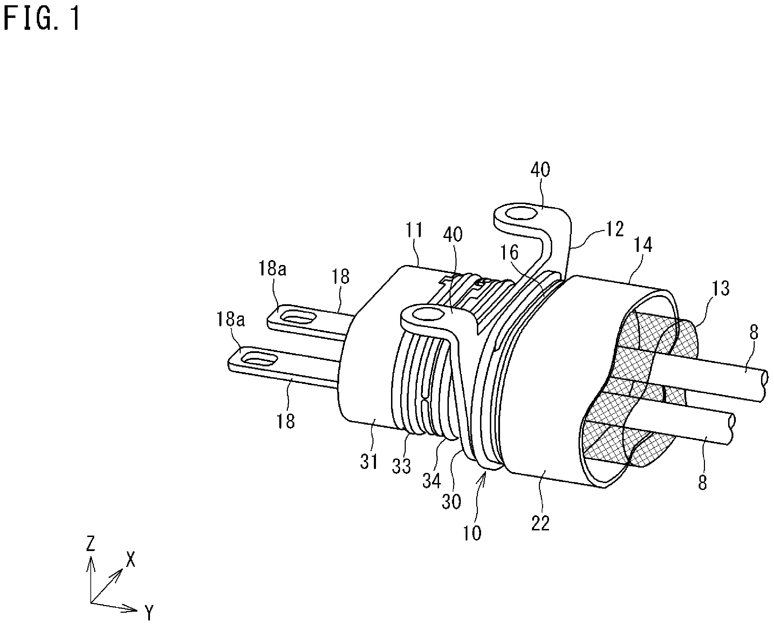

A connector assembly 10 of the present embodiment shown in FIG. 1 is used in a conductive path for electrically connecting multiple electrical devices. Specifically, electrical devices such as inverters and batteries are installed in a vehicle, such as an electric or hybrid vehicle, for example. The electrical devices (in-vehicle devices) are connected via a conductive path for power supply. The conductive path includes a wire harness (electric wire) and a connector connected to an end portion of the wire harness. The connector assembly 10 of the present embodiment is used as the connector.

### [Entire configuration of connector assembly 10]

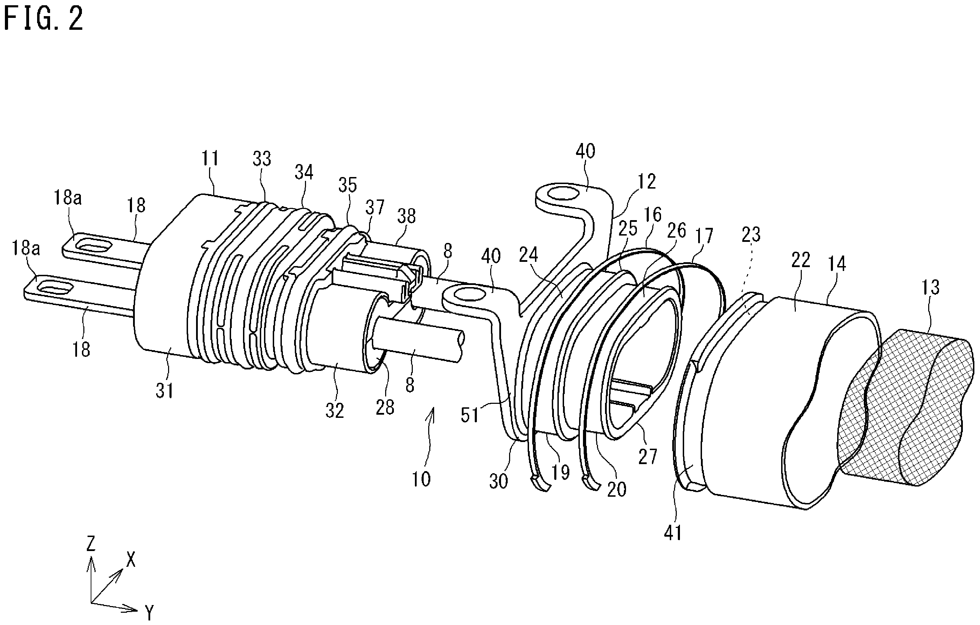

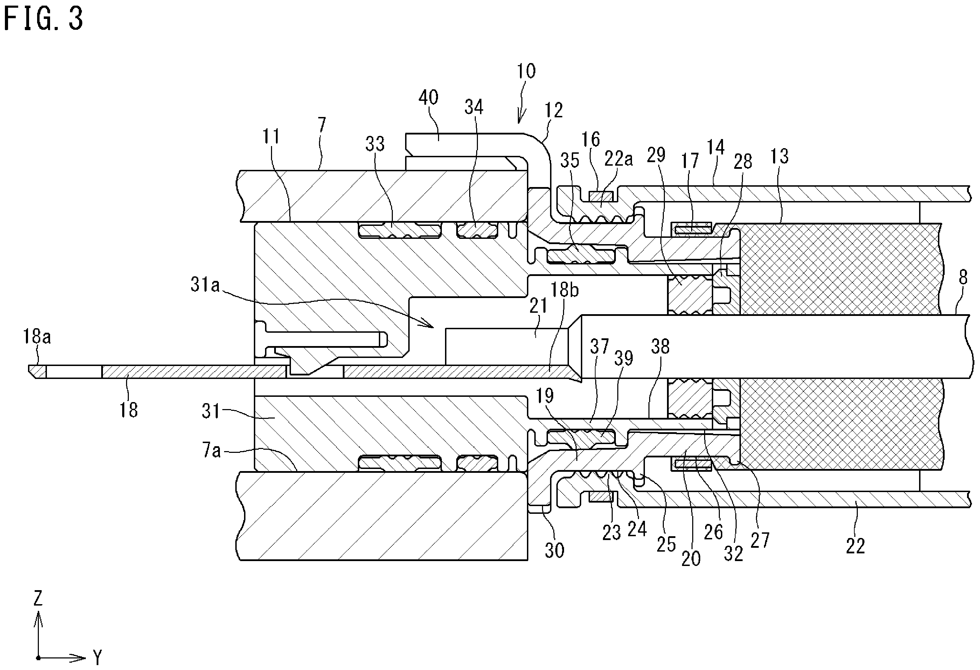

FIG. 1 is a perspective view showing the connector assembly 10 of the present embodiment. FIG. 2 is an exploded perspective view of the connector assembly 10 shown in FIG. 1. FIG. 3 is a cross-sectional view of the connector assembly 10 shown in FIG. 1. The connector assembly 10 is attached to a portion of a case 7 (see FIG. 3) of the electrical device. Two electric wires 8 are connected to the connector assembly 10. Power is supplied to the electrical device through the electric wires 8 and the connector assembly 10.

The connector assembly 10 includes a connector housing 11, a shield shell 12, a braided wire 13, a rubber boot 14, a first tightening member 16, and a second tightening member 17. The connector assembly 10 (see FIG. 3) further includes a retainer 28, an annular sealing member 29, a first rubber ring 33, a second rubber ring 34, and a third rubber ring 35.

The connector housing 11 holds terminals 18 connected to end portions 21 of the electric wires 8. Each terminal 18 is a member that is long in one direction and is made of metal. One end portion 18a of the terminal 18 is electrically connected to a mating connector (not shown) of the electrical device. Another end portion 18b of the terminal 18 is electrically connected to the electric wire 8. Each electric wire 8 is provided so as to extend in a first direction (direction from left to right in FIG. 3) from the connector housing 11.

Here, directions in the connector assembly 10 of the present disclosure are defined. The direction in which the electric wires 8 are provided so as to extend from the connector housing 11 (the first direction) is defined as "front-rear direction". The one end portion 18a side of the terminals 18 is "front", and the direction side where the electric wires 8 are provided so as to extend (the right side in FIG. 3) is "rear". The two electric wires 8 are provided so as to be aligned (see FIG. 1 and FIG. 2). The direction in which the two electric wires 8 are aligned is defined as "right-left direction". The direction orthogonal to both the front-rear direction and the right-left direction is defined as "up-down direction". In each drawing, an XYZ rectangular coordinate system is shown. The X direction is the right-left direction, the Y direction is the front-rear direction (direction from front toward rear), and the Z direction is the up-down direction (direction from bottom toward top).

One terminal 18 is connected to one electric wire 8. In the connector housing 11, the two terminals 18 are provided so as to be aligned in the right-left direction.

The connector housing 11 and the shield shell 12 each have an oval columnar or tubular shape as a whole. Therefore, the front-rear direction can be referred to as "axial direction", whereas the right-left direction and the up-down direction orthogonal thereto can be collectively referred to as "radial direction".

### [Connector housing 11]

The connector housing 11 is made of resin. The connector housing 11 has a holding portion 31 and a shell attachment portion 32. The holding portion 31 has an oval columnar shape having the right-left direction as a major axis direction. A space 31a for housing the terminals 18 is provided inside the holding portion 31 (see FIG. 3). The shell attachment portion 32 has a substantially oval tubular shape having the right-left direction as a major axis direction. The holding portion 31 is a portion in which the terminals 18 are housed and held. The terminals 18 are fixed to the holding portion 31. The shell attachment portion 32 is provided so as to extend rearward (in the Y direction) from the holding portion 31, and is shaped so as to be smaller in the up-down direction and the right-left direction (radial direction) than the holding portion 31.

The shell attachment portion 32 has a first tubular portion 37 on the front side and a second tubular portion 38 on the rear side. The outer periphery of the first tubular portion 37 is provided with an attachment groove 39 to which the third rubber ring 35 is attached. The second tubular portion 38 is shaped so as to be smaller in the up-down direction and the right-left direction (radial direction) than the first tubular portion 37.

The sealing member 29 is an annular member made of rubber, comes into close contact with the outer peripheral surfaces of the electric wires 8, and comes into close contact with the inner peripheral surface of the shell attachment portion 32 (second tubular portion 38). The sealing member 29 prevents foreign matter such as water from entering from between the electric wires 8 and the connector housing 11.

The retainer 28 is a member made of resin and having holes through which the two electric wires 8 extend. The retainer 28 is attached to a rear portion of the shell attachment portion 32 (second tubular portion 38) and prevents the sealing member 29 from falling off rearward.

The first rubber ring 33 and the second rubber ring 34 are each an annular member made of rubber. The first rubber ring 33 and the second rubber ring 34 are attached to the outer peripheral surface of the holding portion 31 so as to be aligned in the front-rear direction. The first rubber ring 33 and the second rubber ring 34 come into close contact with attachment holes 7a of the case 7 of the electrical device. The first rubber ring 33 and the second rubber ring 34 prevent foreign matter such as water from entering from between the connector housing 11 and the case 7.

The third rubber ring 35 is an annular member made of rubber. The third rubber ring 35 is attached to the outer peripheral surface of the shell attachment portion 32 (first tubular portion 37). The third rubber ring 35 comes into close contact with the inner peripheral surface of the shield shell 12 (boot attachment portion 19 described later). The third rubber ring 35 prevents foreign matter such as water from entering from between the connector housing 11 and the shield shell 12.

### [Shield shell 12]

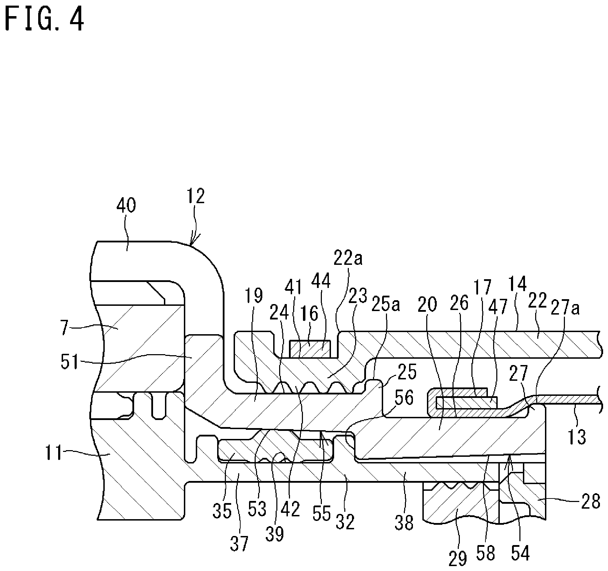

The shield shell 12 has a tubular body 30 and surrounds the shell attachment portion 32 of the connector housing 11. In addition to the tubular body 30, the shield shell 12 has a flange portion 40 which is attached to the case 7. The shield shell 12 is made of metal. The shield shell 12 is a cast product. In the present embodiment, the case 7 is made of aluminum, and the shield shell 12 is also made of the same aluminum to prevent electric corrosion caused by dissimilar metal contact. FIG. 4 is a cross-sectional view showing a part of the shield shell 12.

The shield shell 12 has the tubular boot attachment portion 19 for attaching the rubber boot 14, and a tubular wire attachment portion 20 for attaching the braided wire 13. The wire attachment portion 20 is provided on the first direction side where the electric wires 8 extend from the connector housing 11, with respect to the boot attachment portion 19. That is, the wire attachment portion 20 is provided on the rear side with respect to the boot attachment portion 19. The flange portion 40 is provided on the front side of the boot attachment portion 19.

The boot attachment portion 19 and the wire attachment portion 20 each have an oval tubular shape having the right-left direction as a major axis direction (see FIG. 2). The outer periphery and the inner periphery of the wire attachment portion 20 are both shaped so as to be smaller in the up-down direction and the right-left direction than those of the boot attachment portion 19. The third rubber ring 35 comes into contact with the inner peripheral surface of the boot attachment portion 19. The shield shell 12 is a cast product, and the boot attachment portion 19, the wire attachment portion 20, and the flange portion 40 are integrally molded.

### [Braided wire 13]

The braided wire 13 is an electrical conductor formed by braiding wires made of metal (e.g., copper). The braided wire 13 is provided along the electric wires 8, has a long tubular shape, and surrounds the electric wires 8. The braided wire 13 is attached to the wire attachment portion 20 of the shield shell 12 and is electrically connected to the shield shell 12. The braided wire 13 covers the outer peripheral surface of the wire attachment portion 20. The braided wire 13 is tightened and fixed to the wire attachment portion 20 by the second tightening member 17 described later. As described above, the braided wire 13 is attached to the shield shell 12 and surrounds the electric wires 8 extending in the first direction from the connector housing 11. The braided wire 13, together with the shield shell 12, serves as a shield for the electric wires 8.

### [Rubber boot 14]

The rubber boot 14 is made of rubber. The rubber boot 14 is provided along the braided wire 13, has a long tubular shape, and surrounds the braided wire 13. FIG. 1 and FIG. 2 show a state where the rubber boot 14 is cut in the middle. The rubber boot 14 is attached to the boot attachment portion 19 of the shield shell 12. The rubber boot 14 covers the outer peripheral surface of the boot attachment portion 19. The rubber boot 14 is tightened and fixed to the boot attachment portion 19 by the first tightening member 16 described later. As described above, the rubber boot 14 is attached to the shield shell 12 and surrounds the braided wire 13. The rubber boot 14 is provided along the longitudinal direction of the electric wires 8.

The rubber boot 14 has a tubular boot body 22 surrounding the braided wire 13, and an annular sealing portion 23 (see FIG. 4). The sealing portion 23 is provided so as to protrude inward in the radial direction of the boot body 22 from an end portion 22a on the front side of the boot body 22. The sealing portion 23 has a plurality of annular protrusion-like lip portions 42, and the lip portions 42 come into contact with a sealing surface 24. An annular recessed groove 41 is formed on the outer periphery of the end portion 22a of the boot body 22. The first tightening member 16 described later is attached to the recessed groove 41. The rubber boot 14 is tightened and fixed to the boot attachment portion 19 by the first tightening member 16.

### [First tightening member 16 and second tightening member 17]

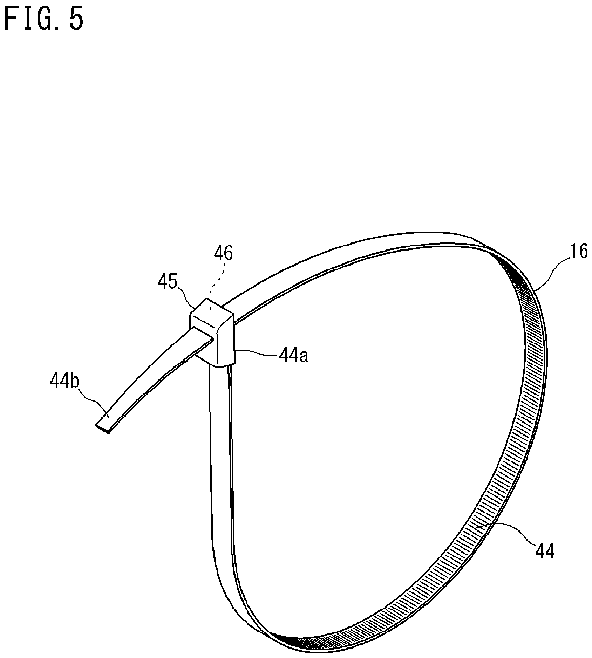

The first tightening member 16 is a member that tightens the rubber boot 14 to the shield shell 12. FIG. 5 is a perspective view of the first tightening member 16. The first tightening member 16 has an elongated band-like portion 44 and a tightening portion 45 provided at one end 44a of the band-like portion 44. The tightening portion 45 has a locking portion 46. The locking portion 46 allows another end 44b of the band-like portion 44 to be inserted therethrough, and prevents the inserted band-like portion 44 from moving in a direction opposite to the insertion direction. The locking portion 46 has a claw, and this claw engages a portion of the band-like portion 44, thereby preventing the looped band-like portion 44 from being enlarged in diameter.

The band-like portion 44 is provided along the outer periphery of the rubber boot 14 fitted externally to the boot attachment portion 19 (see FIG. 4). The other end 44b of the band-like portion 44 is inserted through the locking portion 46. The rubber boot 14 is tightened to the boot attachment portion 19 by the band-like portion 44. The first tightening member 16 becomes annular in shape in a state where the rubber boot 14 is tightened. The first tightening member 16 may be made of metal such as stainless steel, but in the present embodiment, the first tightening member 16 is made of resin.

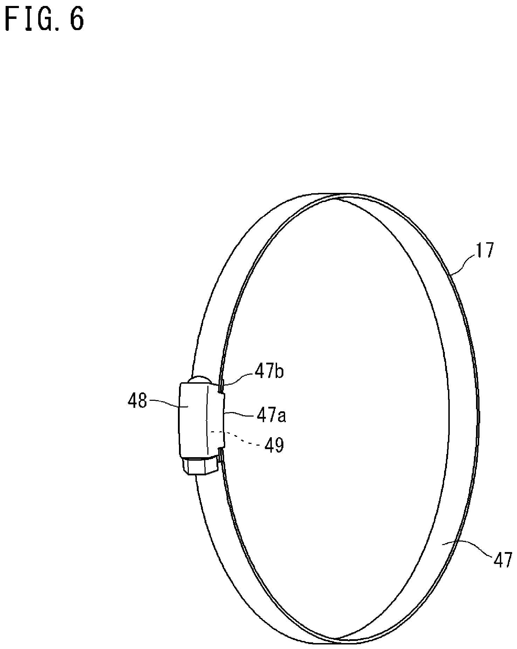

The second tightening member 17 is a member that tightens the braided wire 13 to the shield shell 12. FIG. 6 is a perspective view of the second tightening member 17. The second tightening member 17 has an elongated band-like portion 47 and a tightening portion 48 provided at one end 47a of the band-like portion 47. The tightening portion 48 has a locking portion 49. The locking portion 49 allows another end 47b of the band-like portion 47 to be inserted therethrough, and prevents the inserted band-like portion 47 from moving in a direction opposite to the insertion direction. The locking portion 49 has a claw, and this claw engages a portion of the band-like portion 47, thereby preventing the looped band-like portion 47 from being enlarged in diameter.

The band-like portion 47 is provided along the outer periphery of the tubular braided wire 13 provided on the outer periphery of the wire attachment portion 20 (see FIG. 4). The other end 47b of the band-like portion 47 is inserted through the locking portion 49. The braided wire 13 is tightened to the wire attachment portion 20 by the band-like portion 47. The second tightening member 17 becomes annular in shape in a state where the braided wire 13 is tightened. The second tightening member 17 may be made of resin, but is made of metal such as stainless steel. Since the second tightening member 17 is made of metal, the second tightening member 17 is less likely to be deformed by heat and the tightening force thereof is less likely to be released.

In a state where the braided wire 13 provided on the outer peripheral side of the wire attachment portion 20 is tightened by the second tightening member 17, as shown in FIG. 4, an end portion, of the braided wire 13, which protrudes from the second tightening member 17 toward the front side is folded back toward the rear side and overlaid on the second tightening member 17. Although not shown, the end portion of the braided wire 13 may be further fixed by adhesive tape from above.

### [Boot attachment portion 19 and wire attachment portion 20]

The boot attachment portion 19 will be further described with reference to FIG. 2 and FIG. 4. The boot attachment portion 19 has a tubular shape, and has the sealing surface 24 and a first protrusion portion 25 on the outer peripheral side thereof. The sealing surface 24 is a tubular surface, and the sealing portion 23 of the rubber boot 14 comes into contact therewith. The sealing portion 23 is brought into contact with the sealing surface 24 while being pressed against the sealing surface 24 by the first tightening member 16. The first protrusion portion 25 protrudes outward in the radial direction of the boot attachment portion 19 from a portion (end portion) on the rear side of the sealing surface 24. A distal end 25a of the first protrusion portion 25 is located outward of the sealing surface 24 in the radial direction. The first protrusion portion 25 is provided over the entire circumference of the boot attachment portion 19.

The boot attachment portion 19 further has an annular portion 51. The annular portion 51 is provided so as to protrude outward in the radial direction of the boot attachment portion 19 from a portion (end portion) on the front side of the sealing surface 24. The flange portion 40 is connected to both side portions in the right-left direction of the annular portion 51. The boot attachment portion 19 has, on the inner peripheral side thereof, a contact surface with which the third rubber ring 35 comes into contact.

In a cross-section orthogonal to the right-left direction and shown in FIG. 4, the sealing surface 24 has a linear shape parallel to a straight line in the front-rear direction. In the cross-section, an inner peripheral surface 55 of the boot attachment portion 19 has a linear shape inclined with respect to a straight line in the front-rear direction. That is, the boot attachment portion 19 has, in the inner peripheral surface 55 thereof, a first inclined surface 53 reduced in diameter from the front toward the rear. Therefore, the boot attachment portion 19 is formed such that a thickness dimension in the radial direction thereof decreases from the rear toward the front. The first inclined surface 53 is a contact surface for the third rubber ring 35.

The wire attachment portion 20 will be further described with reference to FIG. 2 and FIG. 4. The wire attachment portion 20 has a tubular shape, and has an electrical connection surface 26 on the outer peripheral side thereof. The electrical connection surface 26 is a tubular surface and is electrically connected to the braided wire 13. A portion of the braided wire 13 is brought into contact with the electrical connection surface 26 while being tightened to the electrical connection surface 26 by the second tightening member 17. As described above, the wire attachment portion 20 is shaped so as to be smaller in the up-down direction and the right-left direction than the boot attachment portion 19. Therefore, the electrical connection surface 26 is provided inward of the sealing surface 24 in the radial direction.

The wire attachment portion 20 has a second protrusion portion 27 on the outer peripheral side thereof. The second protrusion portion 27 protrudes outward in the radial direction of the wire attachment portion 20 from a portion (end portion) on the rear side of the electrical connection surface 26. A distal end 27a of the second protrusion portion 27 is located outward of the electrical connection surface 26 in the radial direction. The second protrusion portion 27 is provided over the entire circumference of the wire attachment portion 20. As shown in FIG. 4, the distal end 27a of the second protrusion portion 27 is located inward of the distal end 25a of the first protrusion portion 25 in the radial direction. Furthermore, in the present embodiment, the distal end 27a of the second protrusion portion 27 is located inward of the sealing surface 24 in the radial direction.

The inner peripheral surface (first inner peripheral surface 54) of the wire attachment portion 20 is shaped so as to be smaller in the up-down direction and the right-left direction (radial direction) than the inner peripheral surface (second inner peripheral surface 55) of the boot attachment portion 19. Therefore, an annular wall surface 56 is provided between the first inner peripheral surface 54 and the second inner peripheral surface 55 (see FIG. 4). The wall surface 56 is an annular surface that faces frontward.

In the cross-section orthogonal to the right-left direction and shown in FIG. 4, the electrical connection surface 26 has a linear shape parallel to a straight line in the front-rear direction. In the cross-section, the inner peripheral surface 54 of the wire attachment portion 20 has a linear shape inclined with respect to a straight line in the front-rear direction. That is, the wire attachment portion 20 has, in the inner peripheral surface 54 thereof, a second inclined surface 58 enlarged in diameter from the front toward the rear. Therefore, the wire attachment portion 20 is formed such that a thickness dimension in the radial direction thereof decreases from the front toward the rear.

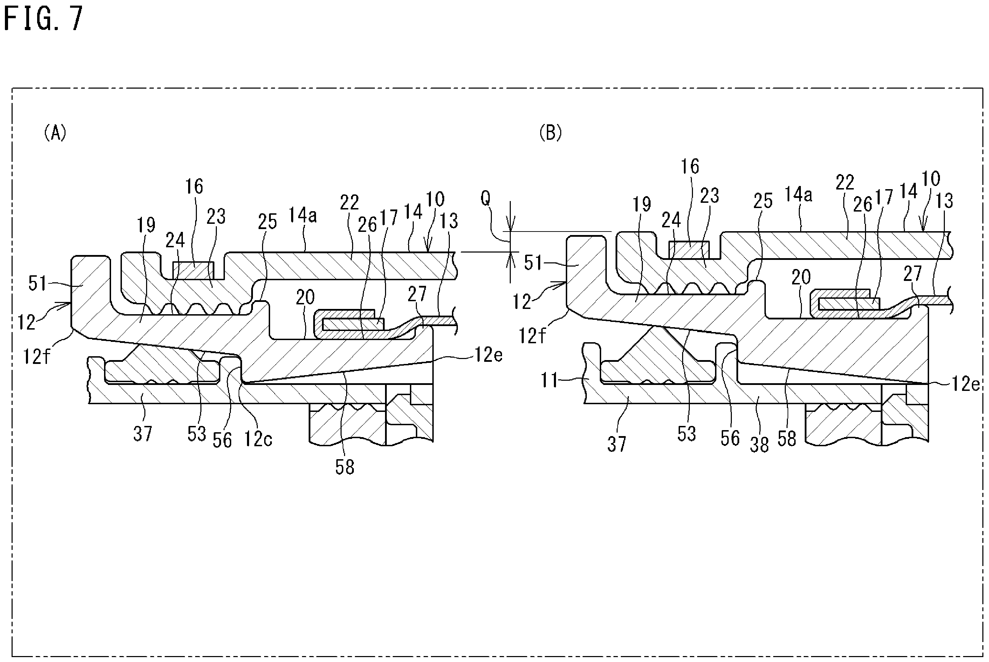

FIG. 7 shows schematic diagrams of the boot attachment portion 19 and the wire attachment portion 20. In the present embodiment shown in the diagram (A) on the left side of FIG. 7, as described above, the boot attachment portion 19 has, on the inner peripheral side thereof, the first inclined surface 53 reduced in diameter toward the rear direction. The wire attachment portion 20 has, on the inner peripheral side thereof, the second inclined surface 58 enlarged in diameter toward the rear direction. In FIG. 7, for the sake of clarity of description, the inclination angles of the wire attachment portion 20 and the boot attachment portion 19 on the inner peripheral side are shown larger than actual ones.

As described above, the shield shell 12 is produced by casting. When the shield shell 12 which is a cast product is demolded from a casting mold, a split mold for forming the inner peripheral surface of the shield shell 12 moves in the axial direction. Since the shield shell 12 has the first inclined surface 53 and the second inclined surface 58, demolding is facilitated.

The diagram (B) shown on the right side of FIG. 7 shows a modification. In this modification, the boot attachment portion 19 has, on the inner peripheral side thereof, the first inclined surface 53 reduced in diameter toward the rear direction. In this respect, the modification is the same as the present embodiment shown in the diagram (A) on the left side of FIG. 7. However, in the modification, the wire attachment portion 20 has, on the inner peripheral side thereof, the second inclined surface 58 reduced in diameter toward the rear direction. That is, the direction of inclination of the inner peripheral side of the wire attachment portion 20 is opposite between the present embodiment and the modification.

The dimension in the radial direction (inner diameter) of the first tubular portion 37 is the same in the present embodiment shown in the diagram (A) of FIG. 7 and in the modification shown in the diagram (B) of FIG. 7.

In the case of the modification (FIG. 7(B)), the inner peripheral surface of the shield shell 12 as a whole becomes larger in the radial direction from the rear side toward the front side. That is, with a rear end 12e of the shield shell 12 as a starting point, the inner peripheral surface of the shield shell 12 becomes larger in the radial direction from the rear end 12e toward a front end 12f. Therefore, the dimension in the radial direction from the rear end 12e to the front end 12f becomes larger. As a result, the shield shell 12 becomes thicker in the radial direction.

In contrast, in the case of the present embodiment (FIG. 7(A)), with a center portion 12c in the front-rear direction as a starting point, the inner peripheral surface of the shield shell 12 becomes larger in the radial direction from the center portion 12c toward the front, and also becomes larger in the radial direction from the center portion 12c toward the rear. Therefore, the dimension in the radial direction from the center portion 12c, which is the starting point, to the front end 12f becomes smaller.

As a result, in the case of the present embodiment (FIG. 7(A)), the shield shell 12 becomes thinner in the radial direction, and the connector assembly 10 including the rubber boot 14 can be made smaller in the radial direction. The dimension difference in the radial direction of an outer surface 14a of the rubber boot 14 between the modification and the present embodiment is indicated as "Q" in FIG. 7. In the present embodiment, the size is smaller in the radial direction than in the modification by the dimension Q.

### [Connector assembly 10 of the present embodiment]

As described above, as shown in FIG. 1, FIG. 2, and FIG. 3, the connector assembly 10 of the present embodiment includes the connector housing 11, the tubular shield shell 12 surrounding the connector housing 11, the tubular braided wire 13 attached to the shield shell 12, the tubular rubber boot 14 attached to the shield shell 12, the first tightening member 16 tightening the rubber boot 14 to the shield shell 12, and the second tightening member 17 tightening the braided wire 13 to the shield shell 12. The connector housing 11 holds the terminals 18 connected to the end portions 21 of the electric wires 8. The braided wire 13 surrounds the electric wires 8 extending rearward from the connector housing 11. The rubber boot 14 surrounds the braided wire 13.

The shield shell 12 has the tubular boot attachment portion 19 for attaching the rubber boot 14, and the tubular wire attachment portion 20 for attaching the braided wire 13. The wire attachment portion 20 is provided on the rear side with respect to the boot attachment portion 19. The rubber boot 14 has the tubular boot body 22 and the annular sealing portion 23. The sealing portion 23 is provided so as to protrude inward in the radial direction from the boot body 22.

The tubular boot attachment portion 19 has, on the outer peripheral side thereof, the tubular sealing surface 24 with which the sealing portion 23 comes into contact, and the first protrusion portion 25. The first protrusion portion 25 protrudes outward in the radial direction from the portion on the rear side of the sealing surface 24.

In the connector assembly 10 of the present embodiment, the first protrusion portion 25 can prevent the rubber boot 14 from falling off rearward. The first protrusion portion 25 is provided on the shield shell 12, and can be designed such that the rubber boot 14 does not interfere with the first protrusion portion 25. That is, the rubber boot 14 no longer needs to be designed to be large, including an allowance, as in the conventional art. As a result, the connector assembly 10 can be downsized in the radial direction.

The shield shell 12 has the tubular wire attachment portion 20. In the present embodiment, the tubular wire attachment portion 20 has, on the outer peripheral side thereof, the tubular electrical connection surface 26 electrically connected to the braided wire 13. The electrical connection surface 26 is provided inward of the sealing surface 24 in the radial direction. The wire attachment portion 20 is smaller in the radial direction than the boot attachment portion 19. Therefore, the boot body 22 surrounding the braided wire 13 attached to the wire attachment portion 20 can be smaller in the radial direction. As a result, the connector assembly 10 can be downsized in the radial direction.

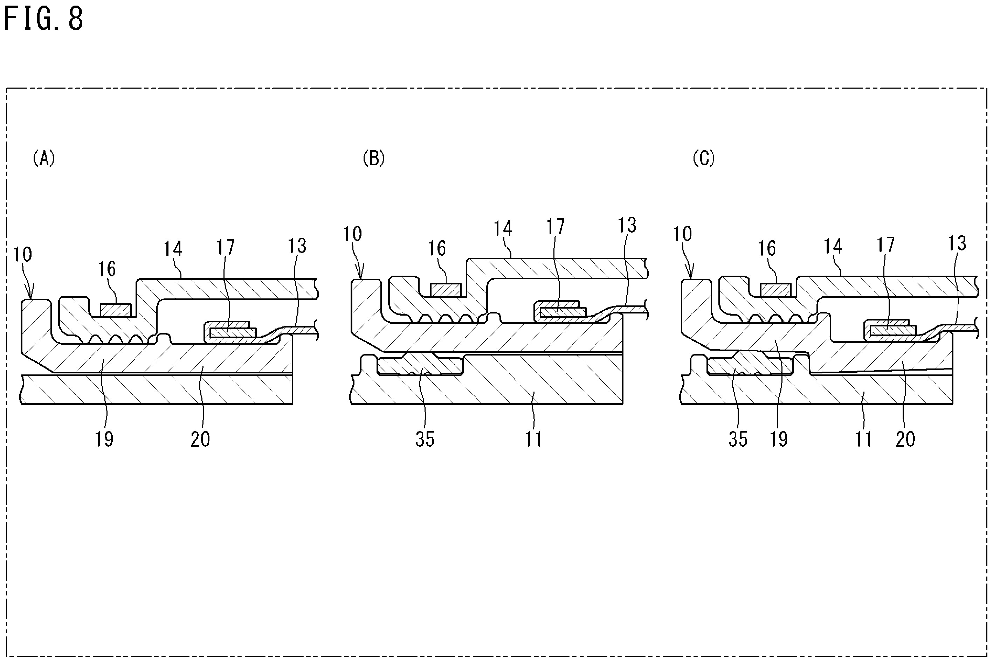

FIG. 8 shows cross-sectional views each showing a part of the connector assembly 10. In FIG. 8, (A) on the left side and (B) at the center show Modification 2 and Modification 3, respectively, and (C) on the right side shows the present embodiment. Compared to the present embodiment shown in (C) and Modification 3 shown in (B), no third rubber ring 35 is provided in Modification 2 shown in (A). In Modification 2, a sealing function to prevent entry of water is low. In Modification 3 shown in (B), the sealing function is enhanced by the provision of the third rubber ring 35, but the dimension in the radial direction is larger than in Modification 2 shown in (A). Therefore, in the present embodiment shown in (C), even though the third rubber ring 35 is provided, the wire attachment portion 20 is smaller in the radial direction than the boot attachment portion 19. Therefore, in the present embodiment, the connector assembly 10 can be downsized in the radial direction.

As shown in FIG. 2 and FIG. 3, in the present embodiment, the wire attachment portion 20 further has the second protrusion portion 27 protruding outward in the radial direction from the portion on the rear side of the electrical connection surface 26. The second protrusion portion 27 can prevent the braided wire 13 from falling off rearward. As shown in FIG. 4, the distal end 27a of the second protrusion portion 27 is located inward of the distal end 25a of the first protrusion portion 25 in the radial direction. Therefore, the wire attachment portion 20 as a whole is smaller in the radial direction than the boot attachment portion 19. Furthermore, the distal end 27a of the second protrusion portion 27 is located inward of the sealing surface 24 in the radial direction. Therefore, the wire attachment portion 20 becomes even smaller in the radial direction. As a result, the boot body 22 can be made smaller in the radial direction, contributing to downsizing the connector assembly 10.

As shown in FIG. 2, the first protrusion portion 25 is provided over the entire circumference of the boot attachment portion 19. Therefore, the function of preventing the rubber boot 14 from falling off is enhanced. The second protrusion portion 27 is provided over the entire circumference of the wire attachment portion 20. Therefore, the function of preventing the braided wire 13 from falling off is enhanced.

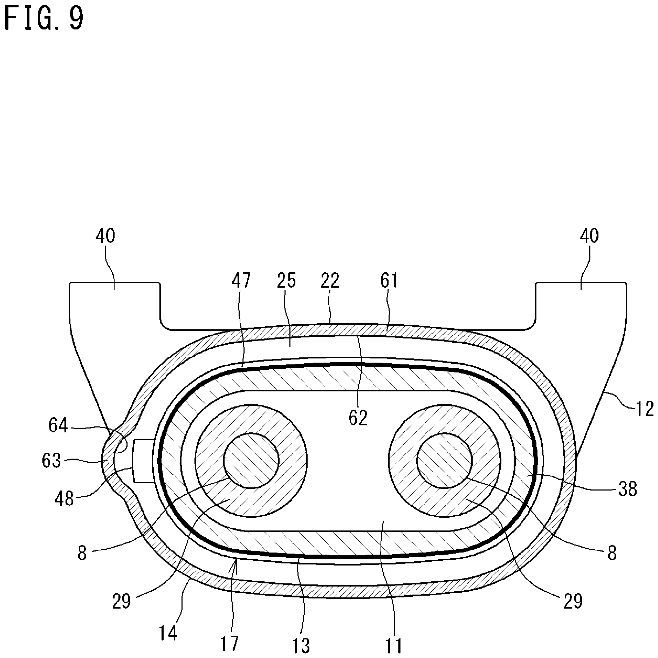

FIG. 9 is a cross-sectional view of a portion where the braided wire 13 is attached by the second tightening member 17. FIG. 9 shows a cross-section orthogonal to the front-rear direction. As described above (see FIG. 6), the second tightening member 17 has the elongated band-like portion 47 and the tightening portion 48 provided at the one end 47a of the band-like portion 47. The tightening portion 48 protrudes outward in the radial direction from the band-like portion 47. Therefore, in the present embodiment, a housing portion 63 for housing the tightening portion 48 is provided at a portion in the circumferential direction of the boot body 22 such that the tightening portion 48 does not interfere with the inner peripheral surface of the rubber boot 14.

That is, in FIG. 9, the boot body 22 has a tubular portion 61 having a smooth inner surface 62, and the housing portion 63 provided at the portion in the circumferential direction of the boot body 22. The smooth inner surface 62 has an oval tubular shape having the right-left direction as a major axis direction. In the housing portion 63, an inner surface 64 thereof is located outward of the inner surface 62 of the tubular portion 61 in the radial direction. That is, at the portion (housing portion 63) of the boot body 42, the inner surface thereof bulges outward in the radial direction.

In the present embodiment, since the boot body 22 is thin, the entire housing portion 63 bulges outward in the radial direction. The tightening portion 48 of the second tightening member 17 is housed at the housing portion 63. Therefore, it is only necessary to provide the housing portion 63 for housing the tightening portion 48 of the second tightening member 17, at the portion in the circumferential direction of the boot body 22, and the entire size of the boot body 22 does not need to be unnecessarily increased.

Thus, the connector assembly 10 can be downsized in the radial direction.

### [Others]

In the present embodiment (see FIG. 2), the case where the first protrusion portion 25 and the second protrusion portion 27 are provided over the entire circumference, has been described, but portions in the circumferential direction of the first protrusion portion 25 and the second protrusion portion 27 may be omitted.

The first tightening member 16 and the second tightening member 17 may be made of materials other than those described above, and may be in forms other than those illustrated.

The above embodiment is merely illustrative and not restrictive in all aspects. The scope of the present invention is defined by the claims, not the embodiment, and includes all changes that come within the range of equivalency of the configurations recited in the claims.

### REFERENCE SIGNS LIST

- 7: case
- 7a: hole
- 8: electric wire
- 10: connector assembly
- 11: connector housing
- 12: shield shell
- 12c: center portion
- 12e: rear end
- 12f: front end
- 13: braided wire
- 14: rubber boot
- 14a: outer surface
- 16: first tightening member
- 17: second tightening member
- 18: terminal
- 18a: one end portion
- 18b: other end portion
- 19: boot attachment portion
- 20: wire attachment portion
- 21: end portion
- 22: boot body
- 22a: end portion
- 23: sealing portion
- 24: sealing surface
- 25: first protrusion portion
- 25a: distal end
- 26: electrical connection surface
- 27: second protrusion portion
- 27a: distal end
- 28: retainer
- 29: sealing member
- 30: body
- 31: holding portion
- 31a: space
- 32: shell attachment portion
- 33: first rubber ring
- 34: second rubber ring
- 35: third rubber ring
- 37: first tubular portion
- 38: second tubular portion
- 39: attachment groove
- 40: flange portion
- 41: recessed groove
- 42: lip portion
- 44: band-like portion
- 44a: one end
- 44b: other end
- 45: tightening portion
- 46: locking portion
- 47: band-like portion
- 47a: one end
- 47b: other end
- 48: tightening portion
- 49: locking portion
- 51: annular portion
- 53: first inclined surface
- 54: first inner peripheral surface
- 55: second inner peripheral surface
- 56: wall surface
- 58: second inclined surface
- 61: tubular portion
- 62: inner surface
- 63: housing portion
- 64: inner surface

## Claims

1. A connector assembly comprising:
a connector housing holding a terminal connected to an end portion of an electric wire;
a tubular shield shell surrounding the connector housing;
a tubular braided wire attached to the shield shell and surrounding the electric wire extending in a first direction from the connector housing;
a tubular rubber boot attached to the shield shell and surrounding the braided wire;
a first tightening member tightening the rubber boot to the shield shell; and
a second tightening member tightening the braided wire to the shield shell,
wherein
the shield shell has
a tubular boot attachment portion for attaching the rubber boot, and
a tubular wire attachment portion for attaching the braided wire,
the wire attachment portion is provided on the first direction side with respect to the boot attachment portion,
the rubber boot has
a tubular boot body, and
an annular sealing portion provided so as to protrude inward in a radial direction from the boot body, and
the tubular boot attachment portion has, on an outer peripheral side thereof,
a tubular sealing surface with which the sealing portion comes into contact, and
a first protrusion portion protruding outward in the radial direction from a portion on the first direction side of the sealing surface.

2. The connector assembly according to claim 1, wherein
the tubular wire attachment portion has, on an outer peripheral side thereof, a tubular electrical connection surface electrically connected to the braided wire,
the wire attachment portion has a second protrusion portion protruding outward in the radial direction from a portion on the first direction side of the electrical connection surface, and
a distal end of the second protrusion portion is located inward of a distal end of the first protrusion portion in the radial direction.

3. The connector assembly according to claim 2, wherein the distal end of the second protrusion portion is located inward of the sealing surface in the radial direction.

4. The connector assembly according to claim 2 or 3, wherein the second protrusion portion is provided over an entire circumference of the wire attachment portion.

5. The connector assembly according to any one of claims 1 to 4, wherein the first protrusion portion is provided over an entire circumference of the boot attachment portion.

6. The connector assembly according to any one of claims 1 to 5, wherein
the second tightening member has a band-like portion provided along an outer periphery of the tubular braided wire, and a tightening portion provided at one end of the band-like portion, and
the tightening portion has a locking portion allowing another end of the band-like portion to be inserted therethrough and preventing the inserted band-like portion from moving in a direction opposite to an insertion direction.

7. The connector assembly according to claim 6, wherein
the boot body has a tubular portion having a smooth inner surface, and a housing portion provided at a portion in a circumferential direction of the boot body and having an inner surface located outward of the tubular portion in the radial direction, and
the tightening portion is housed at the housing portion.

8. The connector assembly according to any one of claims 1 to 7, wherein
the boot attachment portion has, on an inner peripheral side thereof, a first inclined surface reduced in diameter toward the first direction, and
the wire attachment portion has, on an inner peripheral side thereof, a second inclined surface enlarged in diameter toward the first direction.
